(19) Europäisches Patentamt
European Patent Office
Office européen des brevets

(11) **EP 2 477 160 A1**

(12) **EUROPEAN PATENT APPLICATION**

(43) Date of publication:
**18.07.2012 Bulletin 2012/29**

(51) Int Cl.:
***G06T 19/00*** *(2011.01)*

(21) Application number: **12150424.5**

(22) Date of filing: **09.01.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **13.01.2011 KR 20110003691**
**09.06.2011 KR 20110055515**

(71) Applicant: **Pantech Co., Ltd**
**Mapo-gu, Seoul 121-270 (KR)**

(72) Inventors:
• **Ahn, Kye Hyuk**
**121-270 Seoul (KR)**
• **Park, Hyoung Il**
**121-270 Seoul (KR)**
• **Lee, Jong Kwon**
**121-270 Seoul (KR)**

(74) Representative: **Jordan, Volker Otto Wilhelm et al**
**Weickmann & Weickmann**
**Patentanwälte**
**Postfach 860 820**
**81635 München (DE)**

(54) **Apparatus and method for providing augmented reality perceived through a window**

(57) An apparatus to provide an augmented reality includes a window detector to determine a first region and a second region; an information processor to identify a first portion of a virtual-world image layer to be displayed in the first region based on a first viewing direction; and an image processor to display the first portion in the first region, and to display a real-world image layer in the second region. A method for providing an augmented reality includes determining a first region and a second region; identifying a first portion of a virtual-world image layer to be displayed in the first region based on a first viewing direction; and displaying the first portion in the first region, and displaying a real-world image layer in the second region.

**FIG. 1**

EP 2 477 160 A1

## Description

CROSS-REFERENCE TO RELATED APPLICATION

This application claims priority from and the benefit under 35 U.S.C. §119(a)of Korean Patent Application Nos. 10-2011-0003691, filed on January 13, 2011, and 10-2011-0055515, filed on June 9, 2011, all of which are incorporated herein by reference for all purposes as if fully set forth herein.

BACKGROUND

FIELD
The following disclosure relates to an apparatus and method for providing augmented reality (AR) service, and more particularly, to an apparatus and method for providing an AR object in a window form.
DISCUSSION OF THE BACKGROUND
Augmented reality (AR), a form virtual reality, may provide an image obtained by combining a real-world view that may be viewed through eyes of a user with a virtual world including additional information. An AR technology, supplementing the real-world view with the virtual-world images, uses a computer graphic to implement virtual-world environment, while maintaining a real-world environment as a main component in the AR. Computer graphics may provide additional information for the real-world environment. For example, a three-dimensional (3D) virtual image may beoverlapped by an actual image viewed by the user so that the real-world environment and the virtual-world environment may be difficult to be distinguished from each other. Virtual reality technologies may allow users to be immersed in a virtualworld environment. To implement the AR, a computer may recognize a marker, and may display a 3D graphic model connected to the marker on a display screen. The marker may actually exist on a two-dimensional (2D) plane, and may provide information associated with a size, a viewing direction, and a location of the 3D graphic model connected to the marker. The marker and the 3D graphic model may be displayed in various shapes based on a selection of the user.

SUMMARY

Exemplary embodiments of the present invention provide anapparatus and method for providing augmented reality (AR) service in a window form that may display an AR object as if the AR object is displayed through a window.
Additional features of the invention will be set forth in the description which follows, and in part will be apparent from the description, or may be learned by practice of the invention.
An exemplary embodiment of the present invention provides an apparatus to provide an augmented reality, including a window detector to determine a first region and a second region based on a captured image of an object; an information processor to identify a first portion of a virtual-world image layer to be displayed in the first region based on a first viewing direction to the object corresponding to the first region; and an image processor to display the first portion in the first region, and to display a real-world image layer in the second region.
An exemplary embodiment of the present invention providesan apparatus to provide an augmented reality, including an image capturing device to capture an image; a marker recognizing unit to identify a marker from the image; a window detector to determine a first region corresponding to the marker; an information processor to determine a first portion of a virtual-world image layer to be displayed in the first region based on a viewing direction with respect to the marker, thevirtual-world image layer including one or more augmented-reality objects; and an image processor to display the first portion in the first region.
An exemplary embodiment of the present invention provides amethod for providing an augmented reality, including determining a first region and a second region based on a captured image of an object; identifying a first portion of a virtual-world image layer to be displayed in the first region based on a first viewing direction to the object corresponding to the first region; and displaying the first portion in the first region, and displaying a real-world image layer in the second region.
An exemplary embodiment of the present invention provides amethod for providing an augmented reality, including capturing an image using an image capturing device; identifying a marker from the image; determining a first region corresponding to the marker determining a first portion of a virtual-world image layer to be displayed in the first region based on a viewing direction with respect to the marker, thevirtual-world image layer including one or more augmented-reality objects; and displaying the first portion in the first region.
It is to be understood that both forgoing general descriptions and the following detailed description are exemplary and explanatory and are intended to provide further explanation of the invention as claimed. Other features and aspects will be apparent from the following detailed description, the drawings, and the claims.

BRIEF DESCRIPTION OF THE DRAWINGS

The accompanying drawings, which are included to provide a further understanding of the invention and are incorporated in and constitute a part of this specification, illustrate exemplary embodiments of the invention, and together with the description serve to explain the principles of the invention.
FIG. 1 is a diagram illustrating an augmented reality (AR) service provided in a window form according to an exemplary embodiment of the present invention.
FIG. 2 is a diagram illustrating an apparatus to provide an augmented reality (AR) service in a window form according to an exemplary embodiment of the present invention.

FIG. 3 is a flowchart illustrating a method for providing an augmented reality (AR) service in a window form according to anexemplary embodiment of the present invention.

## DETAILED DESCRIPTION OF THE ILLUSTRATED EMBODIMENTS

Exemplary embodiments now will be described more fully hereinafter with reference to the accompanying drawings, in which exemplary embodiments are shown. The present disclosure may, however, be embodied in many different forms and should not be construed as limited to the exemplary embodiments set forth therein. Rather, these exemplary embodiments are provided so that the present disclosure will be thorough and complete, and will fully convey the scope of the present disclosure to those skilled in the art. In the description, details of well-known features and techniques may be omitted to avoid unnecessarily obscuring the presented embodiments.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. Furthermore, the use of the terms a, an, etc. does not denote a limitation of quantity, but rather denotes the presence of at least one of the referenced item. The use of the terms "first", "second", and the like does not imply any particular order, but they are included to identify individual elements. Moreover, the use of the terms first, second, etc. does not denote any order or importance, but rather the terms first, second, etc. are used to distinguish one element from another. It will be further understood that the terms "comprises" and/or "comprising", or "includes" and/or "including" when used in this specification, specify the presence of stated features, regions, integers, steps, operations, elements, and/or components, but do not preclude the presence or addition of one or more other features, regions, integers, steps, operations, elements, components, and/or groups thereof. It will be understood that for the purposes of this disclosure, "at least one of" will be interpreted to mean any combination the enumerated elements following the respective language, including combination of multiples of the enumerated elements. For example, "at least one of X, Y, and Z" will be construed to mean X only, Y only, Z only, or any combination of two or more items X, Y, and Z (e.g. XYZ, XZ, XZZ, YZ, X).

Exemplaryembodiments of the present invention provide an augmented reality (AR) service apparatus and method that displays an AR object in a window form.

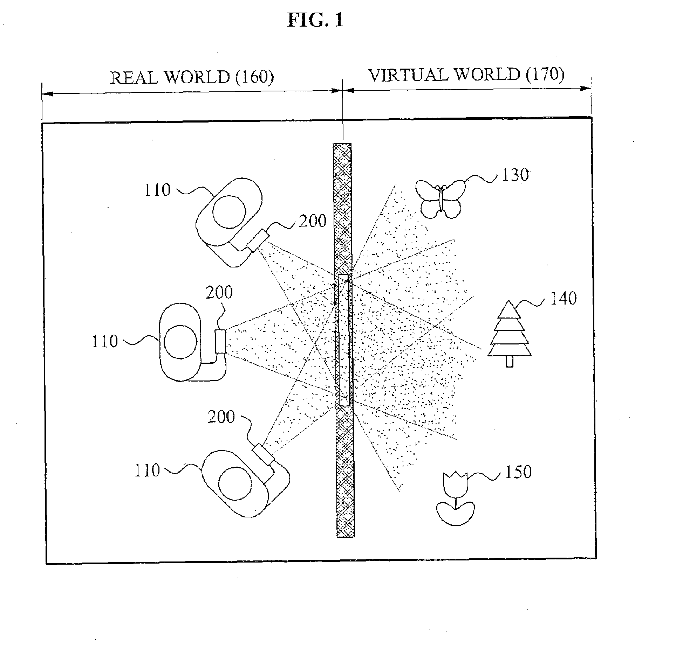

FIG. 1 is a diagram illustrating an augmented reality (AR) service provided in a window form according to an exemplary embodiment of the present invention.

Referring to FIG. 1, a user 110 may capturea marker to receive an AR service from an AR service apparatus 200. The marker may be an image that displays specific information, for example, a QR code. Further, the marker may be an image that contains one or more determined feature points recognizable by an image capturing device, such as a camera.For example, a rectangular-shaped object captured by the AR service apparatus 200 may be recognized as a marker, and the area of the rectangular-shaped object may be determined as a window region 120. Further, if the rectangular-shaped object is captured from a viewing direction 310, the angle between the plane of the window region 120 and the viewing direction 310 may be obtained, and the viewing angle may be stored as a viewing angle $\theta$. Further, the area of the window region 120 may be determined based on the viewing angle $\theta$. For example, the area of the window region 120 may be defined as expressed by Equation 1.

$$[\text{Equation 1}]$$

$$A_w = kA_m \sin\theta$$

where $A_w$ denotes the area of the window region 120, k denotes a coefficient, $A_m$ denotes the area of the marker, and $\theta$ denotes the viewing angle. Further, 'k' may be obtained based on the distance between the AR service apparatus 200 and the marker. For example, 'k' may be inversely proportional to the distance between the AR service apparatus 200 and the marker.

The AR service apparatus 200 may enable rear side AR objects 130, 140, and 150 to be shown through the window region 120 corresponding to the marker.

The AR service apparatus 200 may display the rear side AR objects 130, 140, and 150 on a display screen to be shown through the window region 120 and thus, a portion of the rear side AR objects 130, 140, and 150 may be displayed based on a position of or a projection angle of the AR service apparatus 200 with respect to the window region 120 corresponding to the marker. Hereinafter, the portion of the rear side AR objects 130, 140, and 150 displayed through the window region 120 may be referred to as AR information region.

Based on a plane including the window region 120 determined by the marker, the front side of the plane may be referred to as a real-world space 160, and the rear side may be referred to as a virtual-world space 170.The real-world space 160 may include one or more front side AR objects augmented to the captured real-world image. The virtual-world space 170 may be a virtual image including one or more rear side AR objects. An augmented reality (AR) object may be a two- or three-dimensional image displayed on a display screen of an AR service apparatus 200.

Based on the plane including the window region 120, an AR object placed at the rear side of the plane may be referred to as a rear side AR object, and an AR object placed at the front side of the plane may be referred to as a front side AR object.

The real-world space 160 may be generated as a first layer ("real-world image layer"), and the virtual-world space 170 may be generated as a second layer ("virtual-world image layer") in the AR service apparatus 200. On the display screen of the AR service apparatus 200, the first layer may be displayed and a corresponding second layer may be obtained and matched with the first layer. A portion of the second layer may be displayed through the window region 120 if the window region 120 is displayed on the display screen. If the AR service apparatus 200 is located at the center position with respect to the window region 120, the rear side AR object 140 may be displayed through the window region 120, and the rear side objects 130 and 150 may not be displayed, since the rear side objects 130 and 150 are located in blind spots. Further, the transparency of the first layer may be dynamically controlled in a range of about 1 to about 0. For example, if the transparency of the first layer is changed from 1 to 0.7, the transparency of the second layer may be changed from 0 to 0.3. Thus, the rear side objects 130 and 150 may be displayed along with the real-world space 160 of the first layer.

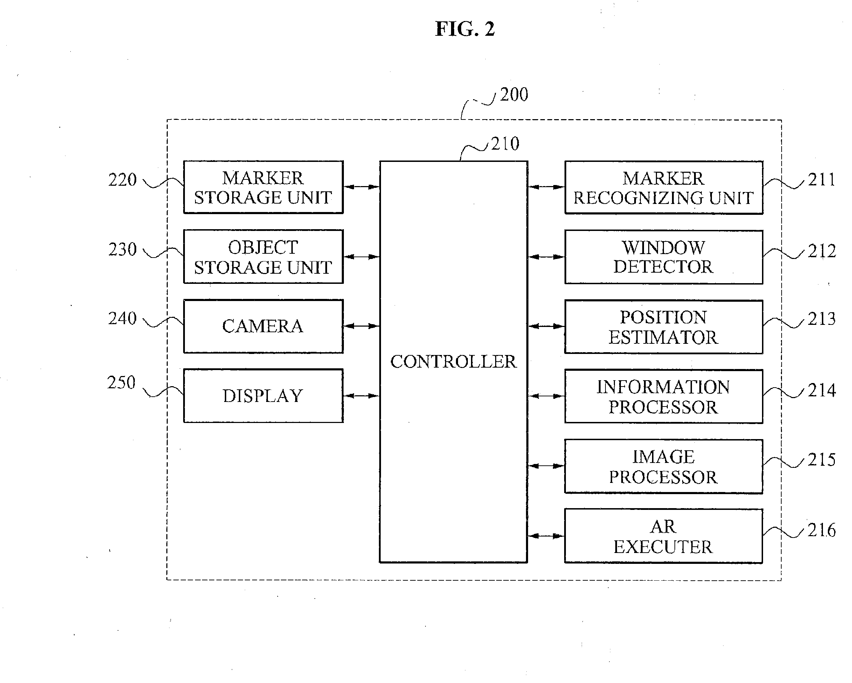

FIG. 2 is a diagram illustrating an apparatus to provide an augmented reality (AR) service in a window form according to an exemplary embodiment of the present invention. The apparatus may be referred to as an AR service apparatus 200.

Referring to FIG. 2, the AR service apparatus 200 includes a controller 210, a marker storage unit 220, an object storage unit 230, a camera 240, a display 250, a marker recognizing unit 211, a window detector 212, a position estimator 213, an information processor 214, an image processor 215, and an augmented reality (AR) executer 216.

The marker storage unit 220 may store marker information and window region information. The marker information may include at least one of a marker image, a marker identification (ID) to identify a marker, and a feature point to be used for tracking a position or angle of the marker. The window region information may include a size, a place, a shape, an angle, and the like of the window region 120.

The object storage unit 230 may store AR object information corresponding to the marker.

The stored AR object information may be three-dimensional (3D) model information to generate a 3D AR image. Further, the AR object may include a two-dimensional (2D) image or a 3D image.

The stored AR object information may be motion information and 3D model information that may be associated with motion of a corresponding AR object. The AR object information may be used for an AR game along with the corresponding AR object.

Further, the stored AR object information may be data associated with the 3D model information used for various purposes, for example, file data, music data, sound data, and the like. Further, the stored AR object information may include information associated with a transmission medium that has an authority to access corresponding data. The transmission medium may be connected through network connections. For example, a user may play a game or share data in various ways using the stored AR object information. If an AR object associated with a sound is displayed as approaching to the user, the sound associated with the AR object may increase. If the AR object is displayed as receding from the user, the sound may decrease. If the AR object is selected, a sound file may be received or may be shared in real time, based on a characteristic of the selected AR object.

The AR object information may be classified into information associated with a rear side AR object and information associated with a front side AR object based on a plane where the window region exists. The rear side AR object may be an AR object located at the rear side of the plane where the window region exists. The front side AR object may be an AR object located at the front side of the plane where the window region exists. The front side AR object may include an AR object corresponding to a window frame of the window region 120. Specifically, a window frame-shaped AR object may be displayed on the display 250. The window frame-shaped AR object may be displayed and relocated according to the position of a marker corresponding to the window region 120 captured by a camera 240 of the AR service apparatus 200.

The camera 240 may provide a static image or a preview image to the marker recognizing unit 211 and/or the display 250. The preview image may be changed in real time if the location or the viewing angle of the camera 240 is changed. Images captured by the camera 240 may be modified by image correction process or camera correction process before being provided to the maker recognizing unit 211 and/or the display 250.

The display 250 may display information associated with a state of the AR service apparatus 200, an indicator, a number, a character, a moving picture, a still picture, and the like. The display 250 may display a marker received from the camera 240, and may display a front side AR object and/or a portion of or all AR information region generated by the image processor 215.

The marker recognizing unit 211 may recognize the marker included in the preview image or the static image captured from the camera 240.

The window detector 212 may detect a window region 120 corresponding to the marker. The size of the window region 120 may be unrelated to the size of the marker, or the window region 120 and the marker may have the same size or corresponding or related sizes. Further, the size of the window region 120 may be determined based on the size of the marker and/or the distance between the marker and the AR service apparatus 200.

The position estimator 213 may determine a positional relationship between the marker and the AR service apparatus 200. Further, the position estimator 213 may determine a positional relationship between the window region120 and the AR service apparatus 200.

The information processor 214 may determine AR information and AR object that corresponds to the marker and that is to be displayed at the rear side the window region 120. Further, the information processor 214 may determine a portion of an AR information region to be displayed through the window region 120, based on the positional relationship.

To display a rear side AR object as if the rear side AR object is shown through the window region 120, a rear side AR object located in a blind spot of the virtual-world space 170 behind the window region 120 may not be displayed on the display 250. Further, the information processor 214 may determine the AR information region that may be displayed through the window region 120 from the virtual-world space 170. Specifically, the information processor 214 may determine the AR information region corresponding to a region in which the rear side AR object may beshown through the window region 120 when viewed from a viewing direction of the AR service apparatus 200.

The image processor 215 may display the determined AR information region in the window region 120. The AR information region may correspond to a region of rear side AR objects shown through the window region 120 when viewed from a viewing direction of the AR service apparatus 200. For example, referring back to FIG. 1, if the window region 120 is viewed from the left side of the window region 120, a flower-shaped AR object 150 may be displayed through the window region 120. If the window region 120 is viewed from the right side of the window region 120, a butterfly-shaped AR object 130 may be displayed through the window region 120. If the window region 120 is viewed from the front side of the window region 120, a tree-shaped AR object 140 may be displayed through the window region 120. The location information of the rear side AR object 130, 140, and 150 may be stored in the object storage unit 230. The rear side AR object 130, 140, and 150 may be displayed as moving around the display 250. The rear side AR object 130, 140, and 150 may be 3D images and may displayed as moving through the window region 120 and be changed into front side AR objects.

The image processor 215 may determine a front side AR object corresponding to the marker, and may display the front side AR object based on the window region 120 and the position of the AR service apparatus 200.

The AR executer 216 may process a motion of a rear side AR object or a front side AR object, as an AR is executed.

The controller 210 may control operations of the AR service apparatus 200. The controller 210 may perform a portion of or all the operations of the marker recognizing unit 211, the window detector 212, the position estimator 213, the information processor 214, the image processor 215, and the AR executer 216. The controller 210, the marker recognizing unit 211, the window detector 212, the position estimator 213, the information processor 214, the image processor 215, and the AR executer 216 are separately illustrated to describe respective operations. The controller 210 may include one or more processors to perform a portion of or all the operations of the marker recognizing unit 211, the window detector 212, the position estimator 213, the information processor 214, the image processor 215, and the AR executer 216.

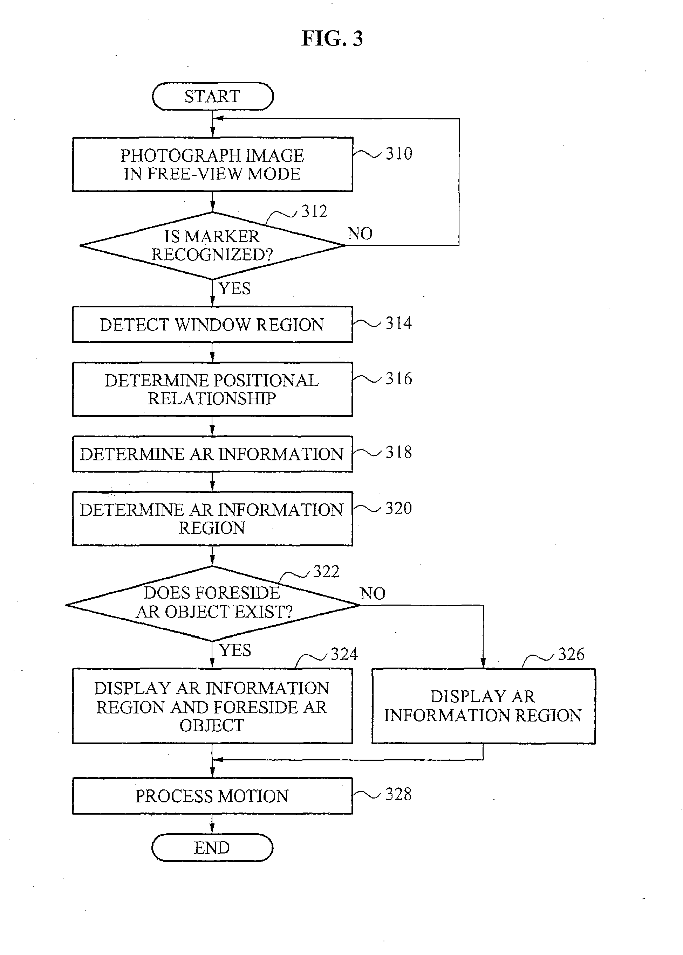

Hereinafter, a method for providing an AR service in a window form according to exemplary embodiments of the present invention will be described with reference to FIG. 3.

FIG. 3 is a flowchart illustrating a method for providing an augmented reality (AR) service in a window form according to an exemplary embodiment of the present invention.FIG. 3 will be described as if performed by an AR service apparatus 200 shown in FIG. 2, but is not limited as such.

Referring to FIG. 3, the AR service apparatus 200 may capture an image in operation 310. The image may be a preview image captured in real time while the AR service apparatus 200 operates the camera 240. In operation 312, the AR service apparatus 200 may determine whether a marker is recognized from the captured image. If it is determined that the marker is not recognized, the AR service apparatus 200 may return to operation 310.

If the marker is recognized, the AR service apparatus 200 may track and detect a window region corresponding to the marker in operation 314. The window region may be window region 120 as shown in FIG. 1.

In operation 316, the AR service apparatus 200 may determine a positional relationship between the marker and the AR service apparatus 200, based on a feature point of the marker. Further, the AR service apparatus 200 may determine a positional relationship between the window region and the AR service apparatus 200, based on a feature point of the marker.

In operation 318, the AR service apparatus 200 may determine AR information that indicates information associated with a rear side AR object corresponding to the marker.

In operation 320, the AR service apparatus 200 may determine an AR information region to be displayed through the window region, based on the positional relationship.

In operation 322, the AR service apparatus 200 may determine whether to display a front side object. The AR service apparatus 200 may determine information associated with a front side AR object.

In operation 324, the AR service apparatus 200 may display the AR information region in the window region, and may display the front side AR object at the real-world space 160if the front side AR object is determined to be displayed. The AR information region may be displayed within the window region and thus, a rear side AR object in the AR information region may be displayed as if the AR information region is shown through the window region.

In operation 326, the AR service apparatus 200 may display the AR information region in the window region if the front side AR object does not exist.

In operation 328, the AR service apparatus 200 may process a motion of the rear side AR object or the front side AR object, as an AR is executed.

The exemplary embodiments according to the present invention may be recorded in computer-readable media including program instructions to implement various operations embodied by a computer. The media may also include, alone or in combination with the program instructions, data files, data structures, and the like. The media and program instructions may be those specially designed and constructed for the purposes of the present invention, or they may be of the kind well-known and available to those having skill in the computer software arts. Examples of computer-readable media include magnetic media such as hard disks, floppy disks, and magnetic tape; optical media such as CD ROM discs and DVD; magneto-optical media such asfloptical disks; and hardware devices that are specially configured to store and perform program instructions, such as read-only memory (ROM), random access memory (RAM), flash memory, and the like. Examples of program instructions include both machine code, such as produced by a compiler, and files containing higher level code that may be executed by the computer using an interpreter. The described hardware devices may be configured to act as one or more software modules in order to perform the operations of the above-described embodiments of the present invention.

According to exemplary embodiments of the present invention, an apparatus and method for providing an AR service may display an AR object in a window form corresponding to a marker, based on a position of the AR service apparatus and a size of the window determined based on the marker, and may display an AR object located at the rear side of a window region to provide the window form.

It will be apparent to those skilled in the art that various modifications and variation can be made in the present invention without departing from the spirit or scope of the invention. Thus, it is intended that the present invention cover the modifications and variations of this invention provided they come within the scope of the appended claims and their equivalents.

An apparatus to provide an augmented reality includes a window detector to determine a first region and a second region; an information processor to identify a first portion of a virtual-world image layer to be displayed in the first region based on a first viewing direction; and an image processor to display the first portion in the first region, and to display a real-world image layer in the second region.A method for providing an augmented reality includes determining a first region and a second region; identifying a first portion of a virtual-world image layer to be displayed in the first region based on a first viewing direction; and displaying the first portion in the first region, and displaying a real-world image layer in the second region.

**Claims**

1. An apparatus to provide an augmented reality, comprising:

    a window detector to determine at least a first region based on a captured image;
    an information processor to identify or to determine a first portion of a virtual-world image layer to be displayed in the first region based on a viewing direction; and
    an image processor to display the first portion in the first region.

2. The apparatus to provide an augmented reality according to claim 1, comprising:

    said window detector to determine a first region and a second region based on a captured image;
    said information processor to identify a first portion of a virtual-world image layer to be displayed in the first region based on a first viewing direction to the object corresponding to the first region; and
    said image processor to display the first portion in the first region;
    wherein preferably the first region is configured to display the first portion of the virtual-world image layer if the object is viewed from the first viewing direction, and the first region is configured to display a second portion of the virtual-world image layer if the object is viewed from a second viewing direction.

3. The apparatus of claim 1 or 2, further comprising:

    a marker recognizing unit to identify a marker captured by an image capturing device, the marker comprising a feature point;
    a position estimator to obtain position information of the marker based on the feature point, wherein the first region is determined based on the position information of the marker.

4. The apparatus of claim 1 or 2, further comprising:

a marker recognizing unit to identify a marker captured by an image capturing device; and
a position estimator to obtain the first viewing direction from the image capturing device toward the marker,
wherein the information processor identifies a first augmented-reality object arranged in the first portion to be displayed in the first region based on the first viewing direction corresponding to the first portion;
wherein preferably:

the position estimator is adapted to obtain a second viewing direction from the image capturing device toward the marker,
the information processor is adapted to identify a second augmented-reality object arranged in a second portion of the virtual-world image layer to be displayed in the first region based on the second viewing direction corresponding to the second portion, and
the image processor is adapted to display the second augmented-reality object in the first region.

5. The apparatus of one of claims 1 to 4, wherein the first portion of the virtual-world image layer comprising a first augmented-reality object, the first augmented-reality object being changed to a portion of the real-world image layer if the first augmented-reality object is displayed as moving toward the real-world image layer.

6. The apparatus to provide an augmented reality according to claim 1, comprising:

an image capturing device to capture an image;
a marker recognizing unit to identify a marker from the image;
said window detector to determine a first region corresponding to the marker;
said information processor to determine a first portion of a virtual-world image layer to be displayed in the first region based on a viewing direction with respect to the marker, the virtual-world image layer comprising one or more augmented-reality objects; and
said image processor to display the first portion in the first region;
wherein preferably the image processor is adapted to display a first augmented-reality object arranged in the first portion of the virtual-world image layer.

7. The apparatus of claim 6, further comprising a position estimator to determine a position of the first region based on a position of the marker.

8. The apparatus of claim 6, further comprising a position estimator to calculate a distance between the image capturing device and the marker, and to obtain the viewing direction,
wherein the window detector determines a size of the first region, based on the distance and the viewing direction.

9. A method for providing an augmented reality, comprising:

determining at least a first region based on a captured image;
identifying or determining a first portion of a virtual-world image layer to be displayed in the first region based on a viewing direction; and
displaying the first portion in the first region.

10. A method for providing an augmented reality, in particular according to claim 9, comprising:

determining a first region and a second region based on a captured image of an object;
identifying a first portion of a virtual-world image layer to be displayed in the first region based on a first viewing direction to the object corresponding to the first region; and
displaying the first portion in the first region, and displaying a real-world image layer in the second region;
wherein preferably the first region is configured to display the first portion of the virtual-world image layer if the object is viewed from the first viewing direction, and the first region is configured to display a second portion of the virtual-world image layer if the object is viewed from a second viewing direction.

11. The method of claim 9 or 10, further comprising:

identifying a marker captured by an image capturing device, the marker comprising a feature point;
obtaining position information of the marker based on the feature point,
wherein the first region is determined based on the position information of the marker.

12. The method of claim 9 or 10, further comprising:

identifying a marker captured by an image capturing device;
obtaining the first viewing direction from the image capturing device toward the marker; and
identifying a first augmented-reality object arranged in the first portion to be displayed in the first region based on the first viewing direction corresponding to the first portion;

said method preferably further comprising:

obtaining a second viewing direction from the image capturing device toward the marker; and
displaying a second portion of the virtual-world image layer in the first region, the second portion corresponding to the second viewing direction.

13. The method of one of claims 9 to 12, wherein a first augmented-reality object of the virtual-world image layer is changed to a portion of the real-world image layer if the first augmented-reality object is displayed as moving toward the real-world image layer.

14. A method for providing an augmented reality, in particular according to claim 9, comprising:

capturing an image using an image capturing device;
identifying a marker from the image;
determining a first region corresponding to the marker;
determining a first portion of a virtual-world image layer to be displayed in the first region based on a viewing direction with respect to the marker, the virtual-world image layer comprising one or more augmented-reality objects; and
displaying the first portion in the first region.

15. The method of claim 14, further comprising determining a position of the first region based on a position of the marker;
or/and
further comprising:

calculating a distance between the image capturing device and the marker, and obtaining the viewing direction; and
determining a size of the first region, based on the distance and the viewing direction;
or/and
further comprising displaying a first augmented-reality object arranged in the first portion of the virtual-world image layer.

**FIG. 1**

REAL WORLD (160)      VIRTUAL WORLD (170)

110

200

200

110

200

110

130

140

150

**FIG. 2**

EP 2 477 160 A1

200

210

| 220 | MARKER STORAGE UNIT | ↔ | | ↔ | MARKER RECOGNIZING UNIT | 211 |
| 230 | OBJECT STORAGE UNIT | ↔ | | ↔ | WINDOW DETECTOR | 212 |
| 240 | CAMERA | ↔ | CONTROLLER | ↔ | POSITION ESTIMATOR | 213 |
| 250 | DISPLAY | ↔ | | ↔ | INFORMATION PROCESSOR | 214 |
| | | | | ↔ | IMAGE PROCESSOR | 215 |
| | | | | ↔ | AR EXECUTER | 216 |

## FIG. 3

```
                    ┌──────────────┐
                    │    START     │
                    └──────┬───────┘
                           │
                           ▼
              ┌─────────────────────────┐
              │   PHOTOGRAPH IMAGE      │────∽ 310
              │   IN FREE-VIEW MODE     │
              └────────────┬────────────┘
                           │
                           ▼
                    ∽312
              ╱─────────────────────╲          NO
              ╲   IS MARKER         ╱──────────────┐
              ╱   RECOGNIZED?       ╲              │
              ╲─────────────────────╱              │
                        │ YES                      │
                        ▼                          │
              ┌─────────────────────────┐          │
              │  DETECT WINDOW REGION   │──∽ 314    │
              └────────────┬────────────┘          │
                           │                       │
                           ▼                       │
              ┌─────────────────────────┐          │
              │  DETERMINE POSITIONAL   │──∽ 316    │
              │     RELATIONSHIP        │          │
              └────────────┬────────────┘          │
                           │                       │
                           ▼                       │
              ┌─────────────────────────┐          │
              │ DETERMINE AR INFORMATION│──∽ 318    │
              └────────────┬────────────┘          │
                           │                       │
                           ▼                       │
              ┌─────────────────────────┐          │
              │ DETERMINE AR INFORMATION│──∽ 320    │
              │        REGION           │          │
              └────────────┬────────────┘
                           │
                           ▼
                    ∽322
              ╱─────────────────────╲       NO
              ╲   DOES FORESIDE     ╱───────────────┐
              ╱   AR OBJECT EXIST?  ╲               │
              ╲─────────────────────╱               │
                        │ YES  ∽324           ∽326  ▼
                        ▼                    ┌──────────────┐
        ┌─────────────────────────┐         │  DISPLAY AR  │
        │  DISPLAY AR INFORMATION │         │ INFORMATION  │
        │  REGION AND FORESIDE AR │         │   REGION     │
        │        OBJECT           │         └──────┬───────┘
        └────────────┬────────────┘                │
                     │◄───────────────────────────┘
                     ▼
        ┌─────────────────────────┐
        │     PROCESS MOTION      │──∽ 328
        └────────────┬────────────┘
                     │
                     ▼
              ┌──────────────┐
              │     END      │
              └──────────────┘
```

Europäisches
Patentamt

European
Patent Office

Office européen
des brevets

# EUROPEAN SEARCH REPORT

**Application Number**

EP 12 15 0424

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | VIMEO USERNAME: DEN IVANOV: "dFusion virtual 3D window", WWW.VIMEO.COM, 27 September 2010 (2010-09-27), XP55022550, Retrieved from the Internet: URL:HTTP://VIMEO.COM/15323327> | 1-4, 6-12,14, 15 | INV. G06T19/00 |
| Y | * the whole document * | 5,13 | |
| X | CHRISTOPH BICHLMEIER ET AL: "Virtual Window for Improved Depth Perception in Medical AR", , 2006, XP55022554, Retrieved from the Internet: URL:http://campar.in.tum.de/pub/bichlmeier 2006window/bichlmeier2006window.pdf> | 1-4, 6-12,14, 15 | |
| A | * abstract * <br> * sections 2 and 3 * | 5,13 | |
| Y | ADRIAN DAVID CHEOK ET AL: "Touch-space: Mixed reality game space based on ubiquitous, tangible, and social computing", PERSONAL AND UBIQUITOUS COMPUTING, vol. 6, no. 5, 1 December 2002 (2002-12-01), pages 430-442, XP55022556, ISSN: 1617-4909, DOI: 10.1007/s007790200047 * abstract * <br> * section 2.2 * | 5,13 | **TECHNICAL FIELDS SEARCHED (IPC)** <br><br> G06T |

-/--

The present search report has been drawn up for all claims

| Place of search | Date of completion of the search | Examiner |
|---|---|---|
| Berlin | 22 March 2012 | Gao, Miao |

EPO FORM 1503 03.82 (P04C01)

Europäisches
Patentamt

European
Patent Office

Office européen
des brevets

# EUROPEAN SEARCH REPORT

**Application Number**

EP 12 15 0424

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JONAS M. WEIKOP ET AL: "Creating a Virtual Window using Image Based Rendering", 8TH ANNUAL INTERNATIONAL WORKSHOP ON PRESENCE (PRESENCE 2005), 1 September 2005 (2005-09-01), XP55022557, * abstract * | 1-15 | |
| A | KATO H ET AL: "Virtual object manipulation on a table-top AR environment", AUGMENTED REALITY, 2000. (ISAR 2000). PROCEEDINGS. IEEE AND ACM INTERN ATIONAL SYMPOSIUM ON MUNICH, GERMANY 5-6 OCT. 2000, PISCATAWAY, NJ, USA,IEEE, US, 5 October 2000 (2000-10-05), pages 111-119, XP010520320, DOI: 10.1109/ISAR.2000.880934 ISBN: 978-0-7695-0846-7 * abstract * | 1-15 | |

**TECHNICAL FIELDS SEARCHED (IPC)**

The present search report has been drawn up for all claims

| Place of search | Date of completion of the search | Examiner |
|---|---|---|
| Berlin | 22 March 2012 | Gao, Miao |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.................................................................................................
& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020110003691
- KR 1020110055515